# EUROPEAN PATENT APPLICATION

(11) **EP 4 590 008 A1**
(43) Date of publication of application: **23.07.2025**
(21) Application number: 24152260.6
(22) Date of filing: 16.01.2024
(51) Int. Cl.: H04W 12/06, H04W 8/20, H04W 12/08, H04W 12/30, H04W 12/72, H04B 7/185, H04W 84/06

(54) **DIGITAL RADIO COMMUNICATION FOR AIRCRAFT**

(71) Applicant: Rockwell Collins, Inc., Cedar Rapids, IA 52498 (US)
(72) Inventor: McElligott, Michael, Cork (IE)
(74) Representative: Dehns

(57) **Abstract**

A digital radio communication system for an aircraft comprises a cellular base station transceiver and a data processing system for location within an aircraft. The base station transmits data to, and receives data from, mobile cellular devices located within the aircraft. The base station receives, by radio from a mobile device located within the aircraft, an identifier associated with an embedded Subscriber Identity Module (eSIM) installed on the mobile device. The system determines whether the received identifier matches an identifier of a stored set of identifiers authorised for the aircraft, each being associated with a respective eSIM associated with the aircraft. When an identifier match exists, the system transmits a radio signal indicative of a successful eSIM authentication to the mobile device. When an identifier match does not exist, the system transmits a radio signal indicative of an unsuccessful eSIM authentication to the mobile device.

## Description

### TECHNICAL FIELD

The present disclosure relates to a digital radio communication system for an aircraft and a method of authenticating a mobile device located within an aircraft for access to a digital radio communication system.

### BACKGROUND

There is an increasing demand for the provision of network access for passengers on-board aircraft to use their own mobile devices to access locally-served digital content (such as movies or an on-board food menu) as well as to access the Internet. Providing Internet network access mid-flight relies on an aircraft's air-to-ground connection (e.g. through satellites or terrestrial providers), which can limit the overall bandwidth available for passengers to use. Providing network access to passengers aboard aircraft therefore imposes challenges in terms of fair usage and prioritisation, as well as privacy since data associated with passenger mobile devices needs to be collected in order to provide such services.

The present disclosure seeks to improve network access on aircraft.

### SUMMARY OF THE DISCLOSURE

When viewed from a first aspect, the present disclosure provides a digital radio communication system for an aircraft, comprising:
a cellular base station transceiver; and
a data processing system,

wherein the cellular base station transceiver and the data processing system are configured for location within an aircraft and the cellular base station transceiver is configured for transmitting data to, and receiving data from, mobile cellular devices located within the aircraft;
wherein the cellular base station transceiver is configured to receive, by radio from a mobile cellular device located within the aircraft, an identifier associated with an embedded Subscriber Identity Module (eSIM) installed on the mobile cellular device; and
wherein the digital radio communication system is configured:
   to use the data processing system to determine whether the received identifier matches an identifier of a stored set of identifiers authorised for the aircraft, each identifier of the stored set of identifiers being associated with a respective eSIM associated with the aircraft;
   when an identifier match exists and optionally one or more further conditions are met, to transmit a radio signal indicative of a successful eSIM authentication to the mobile cellular device; and
   when an identifier match does not exist, to transmit a radio signal indicative of an unsuccessful eSIM authentication to the mobile cellular device.

Thus it will be seen that some examples of the present disclosure may provide an improved radio communication system for an aircraft which may reduce the amount of personal data which needs to be collected and stored from mobile cellular devices of passengers and staff, since authentication may be performed using eSIMs that are provisioned specifically for the aircraft, rather than using personal SIMs of passengers and staff. Furthermore, the use of cellular radio technology may advantageously support improvements in prioritisation between mobile cellular devices, usage capacity, bandwidth and/or data rate, e.g. compared with unregulated IEEE 802.11 b/g/n networks.

In a set of examples, the digital radio communication system is configured:
when an identifier match exists, to grant the mobile cellular device access to the digital radio communication system and/or to a service provided by the digital radio communication system; and
when an identifier match does not exist, to refuse the mobile cellular device access to the digital radio communication system and/or to a service provided by the digital radio communication system.

In some examples, the stored set of identifiers is stored on a memory associated with the aircraft. In a set of examples, the stored set of identifiers is stored on a local memory of the data processing system-i.e. within the aircraft, such as on a local server within the aircraft. Such examples may advantageously allow the system to perform authentication procedures without needing to communicate with a remote server, located away from the aircraft. This can free up some of the available air-to-ground connection bandwidth by avoiding needing to use this for the authentication procedure. It may also enable eSIM authentication to be performed when the aircraft has no active air-to-ground connection. The memory may be a non-volatile memory, such as a magnetic or solid-state drive, and may thus allow for storage of the set of identifiers even if electrical power is interrupted.

In a set of examples, the stored set of identifiers is stored on a server located remotely from the aircraft, as data associated with the aircraft, and the data processing system is configured to access the stored set of identifiers via a remote connection (e.g. an air-to-ground connection and/or the Internet). The set of identifiers may be stored in association with an identifier of the aircraft and/or of a specific flight. Such examples may advantageously reduce the complexity of the system located on the aircraft, and reduce the need for synchronisation between multiple different aircraft each having local memories storing identifiers (which may occupy air-to-ground connection bandwidth and/or require complex management especially if aircraft have only intermittent remote network access).

In some examples, the stored set of identifiers is a subset of a larger set of identifiers associated with respective aircraft of a plurality of aircraft. Each aircraft may have a respective ID associated therewith. The subset of identifiers may be associated with the ID of the aforesaid aircraft. The aircraft ID may be stored in the memory with the subset of identifiers. Such examples may advantageously provide a convenient mechanism for eSIM allocation for a plurality of aircraft.

In some examples, the number of identifiers in the stored set of identifiers is dependent on how many seats for passengers, or for passengers and crew, are on the aircraft-e.g. being equal to the number of seats, or being a multiple of the number of seats (e.g. twice the number of seats). Some such examples may advantageously keep memory capacity required for storage of the identifiers to a minimum by avoiding storage of a greater number of identifiers, or identifiers associated with a particular quality of service (QoS) profile, than a maximum occupancy of the aircraft. In some examples, the number of identifiers in the stored set of identifiers is equal to a number of passenger seats on the aircraft, optionally plus a predetermined number of additional identifiers, with the number of identifiers being less than or equal to a maximum occupancy of the aircraft. In some examples, the stored set of identifiers comprises one or more identifiers for mobile cellular devices used by aircraft staff located on the aircraft, and one or more identifiers for one or more non-passenger mobile cellular devices located on the aircraft.

In a set of examples, each passenger seat on the aircraft is associated with a different respective identifier in the stored set of identifiers. Each seat may be associated with two or more unique identifiers. Such examples may advantageously provide a convenient mechanism for selecting a suitable identifier for allocation to a passenger-i.e. based on their seat. Such examples may also advantageously ensure efficient memory usage by only storing a number of identifiers as is necessary for a particular aircraft, since different aircraft may have different passenger capacities.

In a set of examples, the identifier comprises any one or more of: an International Mobile Subscriber Identity (IMSI), or a Subscription Permanent Identifier (SUPI), or an Integrated Circuit Card ID (ICCID).

In a set of examples, the digital radio communication system is configured, at least when an identifier match exists, to assign a quality of service (QoS) profile to the mobile cellular device, selected from a set of two or more possible QoS profiles at least partly in dependence on the received identifier. The set of possible QoS profiles may be an ordered set-i.e. including at least a first QoS that is higher than a second QoS. The QoS profile may dictate any one or more of download and/or upload speed, bandwidth, maximum download limit and/or upload limit, etc. Such examples may advantageously provide a convenient mechanism for offering different levels of service in dependence on a passenger's ticket type, optional purchases made by passengers, etc.

In some examples, each identifier in the stored set of identifiers is associated with a respective stored QoS profile, and the digital radio communication system is configured to assign to the mobile cellular device the stored QoS profile associated with the received identifier. Such examples may provide a convenient mechanism for determining a suitable QoS profile to allocate to a mobile cellular device without requiring additional information over that required for authentication. In some examples, each passenger seat of the aircraft may be associated with at least two unique eSIM identifiers: a first identifier associated with a first QoS profile, and a second identifier associated with a second, different QoS profile.

In a set of examples, the digital radio communication system is configured:
to receive a validation token by radio from the mobile cellular device;
to determine whether the received validation token matches a validation token of a stored set of validation tokens;
when an identifier match exists and a validation token match exists, to permit use of the digital radio communication system by the mobile cellular device; and
when a validation token match does not exist, to refuse or restrict use of the digital radio communication system by the mobile cellular device.

Such examples may advantageously provide an additional layer of authentication and thus inhibit the ability for system abuse, e.g. by users who obtained an eSIM authorised for the aircraft but who are not authorised to use it on a particular flight (e.g. due to a lack of an additional purchase for network use).

The set of validation tokens may be stored in a memory, which may be the same memory in which the set of identifiers is stored.

In some examples, each identifier in the stored set of identifiers is associated with a different respective stored validation token. Such examples may advantageously provide a convenient mechanism for ascertaining whether a received validation token is valid for a particular eSIM identifier.

In a set of examples, the digital radio communication system is configured to receive, from the mobile cellular device, a validation token comprising textual and/or numerical data input manually by a user of the mobile cellular device using an input mechanism of the mobile cellular device. Such examples may advantageously improve ease of use for users, since the validation token may be easily input, e.g. using a touchscreen keyboard.

In a set of examples, the digital radio communication system is configured, when an identifier match exists, to direct the mobile cellular device to display a secure authentication interface through which a user can input the validation token. Such examples may advantageously provide a secure mechanism by which the validation token authentication process may be conducted, without granting full access to the system for users having a valid eSIM but no validation token (e.g. due to having obtained the eSIM on a previous flight). In some examples the digital radio communication system is configured, when a validation token match does not exist, to redirect the mobile cellular device to the secure authentication interface.

In a set of examples, the digital radio communication system is configured to assign a QoS profile to the mobile cellular device, selected from a set of possible QoS profiles at least partly in dependence on the received validation token. In some examples, each stored validation token is associated with a respective QoS profile; and the digital radio communication system is configured, when an identifier match exists and a validation token match exists, to assign to the mobile cellular device the QoS profile associated with the received validation token. Such examples may perform QoS allocation based on the validation token in addition to, or as an alternative to, doing so based on the identifier. Such examples may advantageously provide a convenient mechanism for providing a plurality of different options for QoS allocation to a mobile cellular device without requiring the installation of a different eSIM, thereby allowing purchase of a higher QoS in-flight (e.g. using loyalty credits in accordance with an airline loyalty scheme) without requiring re-installation of a different eSIM.

In some examples, the validation token is provided to a user of the mobile cellular device for manual input using the mobile cellular device. In some examples, the validation token is provided to the user of the mobile cellular device, being a passenger on the aircraft, with a boarding pass. In some examples, the validation token is a ticket number. In some examples, the validation token is provided to a user of the mobile cellular device via email. The validation token may be provided to the user of the mobile cellular device (i.e. the passenger) before boarding of the aircraft, e.g. in an airport terminal, or earlier such as at the passenger's home.

When viewed from a second aspect, the present disclosure provides a method of provisioning an embedded Subscriber Identity Module (eSIM) profile on a mobile cellular device of an aircraft passenger, for authorising access to a digital radio communication system (which may be a digital radio communication system as disclosed herein), the method comprising:
providing the passenger with a link to an eSIM distribution platform, the link being associated with a specific seat on the aircraft and/or a specific boarding pass;
receiving, from the mobile cellular device of the passenger and via the eSIM distribution platform, a request for an eSIM profile;
transmitting, to the mobile cellular device and via the eSIM distribution platform, an eSIM profile associated with the specific seat on the aircraft and/or the specific boarding pass.

Thus it will be seen that some examples of the present disclosure may provide a convenient mechanism for providing access to a digital radio communication system for a passenger's mobile cellular device, by associating the passenger's seat and/or boarding pass with an eSIM profile, and providing the passenger with a link by which the eSIM profile can be accessed in association with their seat and/or boarding pass. This may advantageously allow eSIM profiles to be distributed to passengers in an efficient and secure manner, and improve ease of use of the digital radio communication system by passengers.

In a set of examples, the link is provided to the passenger using a quick-response (QR) code scannable by a camera of the mobile cellular device of the aircraft passenger. Such examples may improve ease of use for passengers, and reduce user error, by ensuring the link is easily accessible for passengers.

In some examples, the QR code is displayed (e.g. printed) on a physical or digital boarding pass of the passenger. In some examples, the QR code is displayed in proximity of the specific seat of the passenger; it may be displayed on the back of a seat in front of, optionally directly in-front of, the specific seat of the passenger. Such locations may provide a convenient mechanism for distributing links to passengers while maintaining association between the link provided and the passenger's specific seat and/or specific boarding pass.

In a set of examples, the link is a hyperlink provided to the passenger with a digital boarding pass. This may provide another convenient mechanism for distributing links to passengers while maintaining association between the link provided and the passenger's specific seat and/or boarding pass.

When viewed from a third aspect, the present disclosure provides a method of authenticating a mobile cellular device located within an aircraft for access to a digital radio communication system, the digital radio communication system comprising a cellular base station transceiver located on the aircraft and a data processing system located on the aircraft, the method comprising:
receiving, by radio from the mobile cellular device, an identifier associated with embedded Subscribed Identity Module (eSIM) installed on the mobile cellular device;
determining, by the data processing system, whether the received identifier matches an identifier of a stored set of identifiers authorised for the aircraft, each identifier of the stored set of identifiers being associated with a respective eSIM associated with the aircraft;
when an identifier match exists and optionally one or more further conditions are met, transmitting a radio signal indicative of a successful eSIM authentication to the mobile cellular device; and
when an identifier match does not exist, transmitting a radio signal indicative of an unsuccessful eSIM authentication to the mobile cellular device.

When viewed from a fourth aspect, the present disclosure provides a method of provisioning an embedded Subscriber Identity Module (eSIM) profile on a mobile cellular device of an aircraft passenger, for authorising access to a digital radio communication system, the method comprising:
detecting, using a near-field communication (NFC) transceiver, the presence of a mobile cellular device within range of the NFC transceiver, the NFC transceiver being associated with a specific passenger seat on the aircraft; and
transmitting, using the NFC transceiver, an eSIM profile associated with the specific passenger seat on the aircraft.

Thus it will be seen that some examples of the present disclosure may provide a local eSIM distribution platform which utilises NFC in order to distribute eSIMs to passengers at their seat. This may advantageously negate the need to distribute eSIMs by an internet-based distribution platform (which may require the mobile cellular device to already have internet access). In a set of examples, the NFC transceiver is located on the back of an aircraft seat located in-front, optionally directly in-front, of the specific passenger seat with which the NFC transceiver is associated.

The mobile cellular device may be a cell phone, a tablet computer, a laptop computer, a wearable device, or any other cellular device. The cellular base station transceiver may be configured to communicate with the mobile cellular device in accordance with a standardised cellular radio protocol, e.g. a 4G or 5G protocol.

The digital radio communication system and the data processing system may implement any of the operations disclosed herein in software or in hardware or using a combination of software and hardware. In some examples, the data processing system may comprise one or more processors and a memory storing software which, when executed by the one or more processors, causes the data processing system to perform any or all of the processing operations disclosed herein.

Features of any aspect or example described herein may, wherever appropriate, be applied to any other aspect or example described herein. Where reference is made to different examples or sets of examples, it should be understood that these are not necessarily distinct but may overlap.

### BRIEF DESCRIPTION OF THE DRAWINGS

Certain preferred examples of the disclosure will now be described, by way of example only, with reference to the accompanying drawings, in which:
Fig. 1 is a schematic block diagram of a digital radio communication system for an aircraft, in accordance with an example of the present disclosure;
Fig. 2 is a schematic block diagram of a digital radio communication system for an aircraft, in accordance with another example of the present disclosure;
Fig. 3 is a flowchart illustrating a method of provisioning an eSIM profile to the mobile cellular device for authorising access to a digital radio communication system, in accordance with an example of the present disclosure; and
Fig. 4 is a flowchart illustrating a method of authenticating a mobile cellular device located within an aircraft for access to a digital radio communication system, in accordance with an example of the present disclosure.

### DETAILED DESCRIPTION

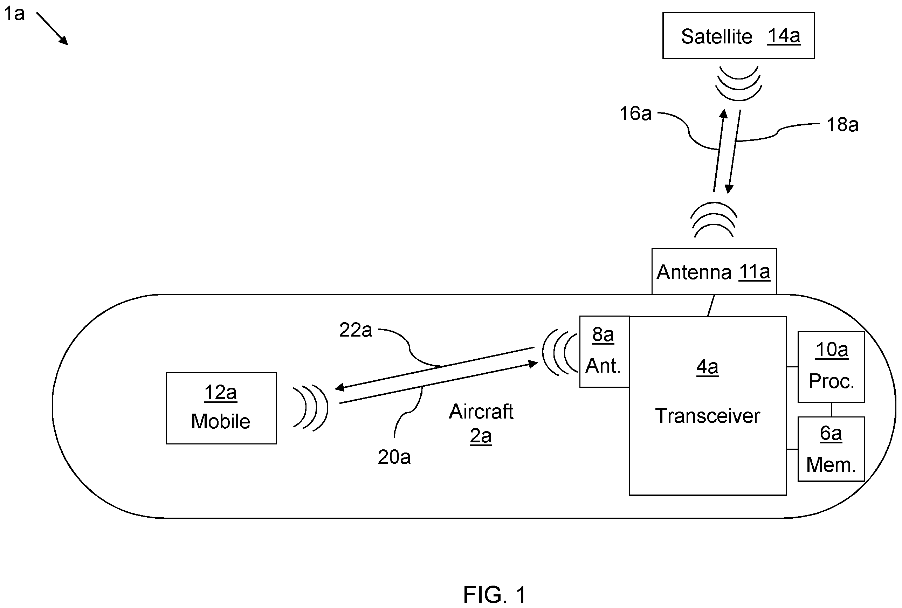

Fig. 1 shows a schematic block diagram of a digital radio communication system 1a for an aircraft 2a, in accordance with an example of the present disclosure. The communication system 1a comprises a cellular base station transceiver 4a located within the aircraft 2a, the base station transceiver 4a being connected to a memory 6a, an antenna 8a, and a data processing system 10a. The base station 4 is also connected to an external antenna 11a located on the exterior of the aircraft. The data processing system 10a is also connected to the memory 6a. Also shown are a mobile cellular device 12a located inside the aircraft 2a, and a communication satellite 14a located outside the aircraft 2a.

The mobile cellular device 12a and the communication satellite 14a each comprise at least one antenna (not shown) and radio circuitry via which radio signals can be transmitted and received. The mobile cellular device 12a and the base station transceiver 4a are each configured to operate in accordance with one or more cellular communication protocols, e.g. 2G, 3G, 4G, 5G, etc.

The base station transceiver 4a and the communication satellite 14a are in wireless communication with each other, as illustrated by signal paths 16a, 18a which respectively indicate radio signal transmissions from the base station transceiver 4a to the satellite 14a, and vice versa. This wireless connection enables the base station transceiver 4a to provide cellular communication access (e.g. for internet access, phone calls, SMS and MMS transmissions, etc.) for mobile cellular devices located on the aircraft, e.g. the device 12a. The satellite 14a may be further wirelessly connected to other ground-based radio devices for this purpose, though description of these is omitted here for the sake of brevity.

The mobile cellular device 12a is in wireless communication with the base station transceiver 4a, as illustrated by signal paths 20a, 22a which respectively illustrate radio signals transmitted by the mobile device 12a and received by the base station transceiver 4b via the antenna 8b, and vice versa.

The base station 4a and data processing system 10a are configured to only permit access thereto by mobile devices which have one of a stored set of authorised embedded Subscriber Identity Modules (eSIMs) installed thereon. This set of authorised eSIMs are stored in the memory 6a, and accessible by the transceiver 4 and the data processing system 10a. Each eSIM stored in the memory 6a is associated with a respective identifier which is also stored in the memory 6a. Each identifier may be e.g. any one or more of an International Mobile Subscriber Identity (IMSI), a Subscription Permanent Identifier (SUPI), an Integrated Circuit Card ID (ICCID), etc.

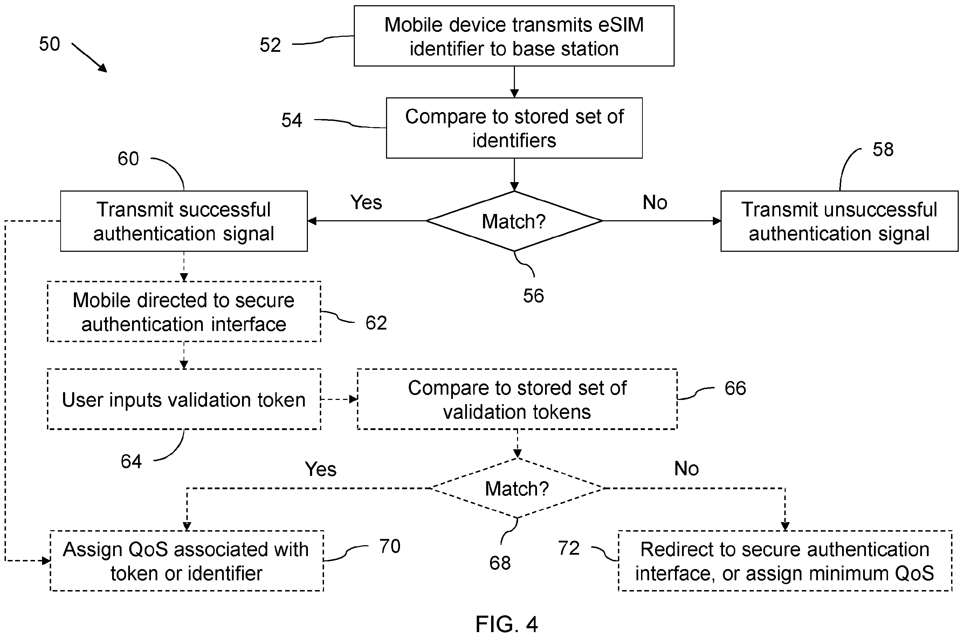

In some examples, a set of validation tokens are also stored in the memory 6a, and each validation token may be associated with a respective eSIM or identifier stored in the memory 6a. In some examples, a set of quality of service (QoS) profiles are also stored in the memory 6a, and each QoS profile may be associated with a respective eSIM, identifier or validation token stored in the memory. This is described in more detail later with reference to Fig. 4.

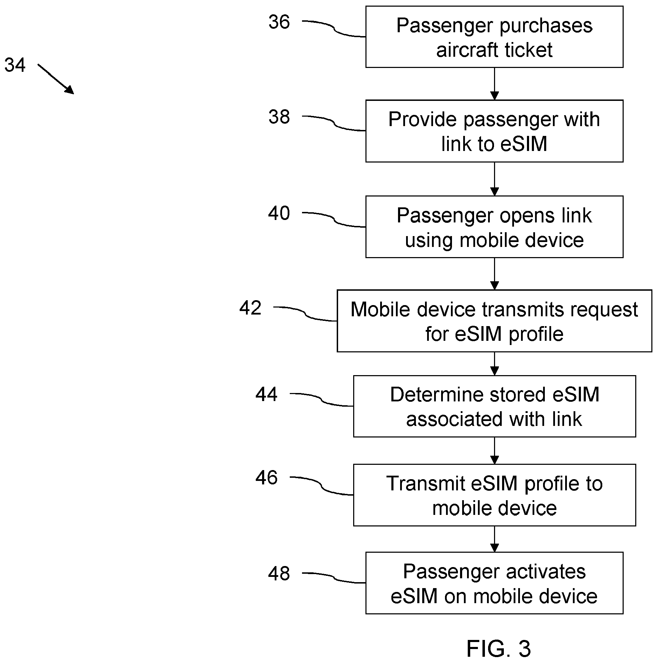

In this example, each passenger seat on the aircraft 2a (not shown for simplicity) is associated with at least one respective eSIM in the set stored in memory 6a. When a passenger purchases a ticket for the aircraft, they are provided with the opportunity to install an eSIM associated with their boarding pass, or their allocated seat, or the seat in which they sit upon boarding the aircraft 2a, on their mobile device. This process is described in more detail later with reference to Fig. 3.

The set of eSIMs (and identifiers) stored in the memory 6a may further include additional eSIMs e.g. for use by airplane staff and/or other devices located in the aircraft 2a capable of cellular communication.

In some examples, each seat may be associated with two or more eSIMs, with each of the eSIMs being associated with a different QoS profile. In other examples, a QoS profile may be determined by a validation token, as described below.

In the present example, the mobile cellular device 12a has an eSIM installed thereon which matches one of the eSIMs stored in the memory 6a. The mobile device 12a has therefore been granted access to the digital radio communication system 1a. The authentication procedure by which it is determined whether the mobile device 12a should be granted access to the communication system 1a is described in further detail later with reference to Fig. 4.

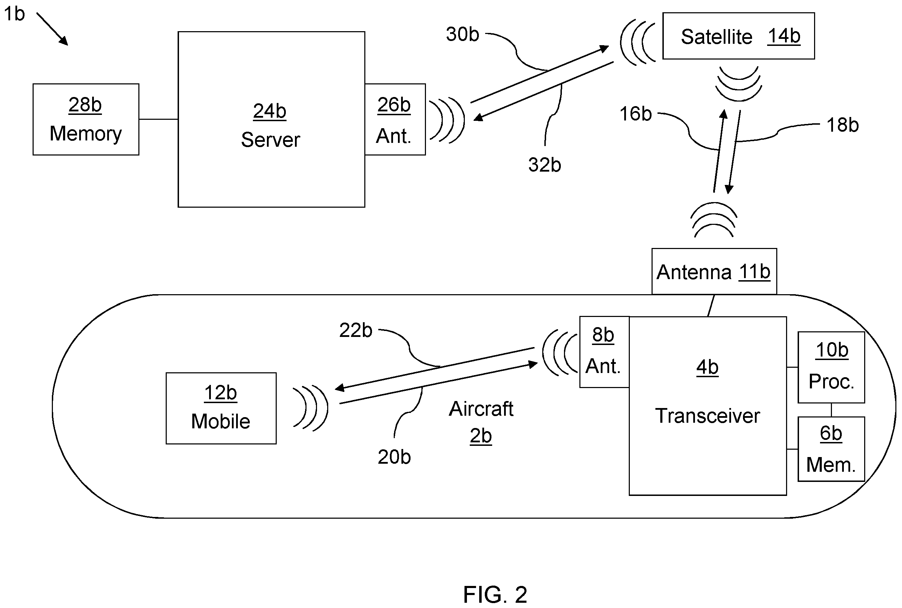

Fig. 2 shows a digital radio communication system 1b for an aircraft 2b in accordance with another example of the present disclosure. Fig. 2 shows many of the same components as shown in Fig. 1, and these operate in much the same way. Unlike Fig. 1, however, in this example the system 1b further comprises a server 24b located remotely from the aircraft 2b. The server 24b is connected to an antenna 26b and a memory 28b, and is in wireless communication with the satellite 14b as illustrated by the signal paths 30b, 32b which respectively illustrate radio signals transmitted by the server 24b via the antenna 26b and received by the satellite 14b, and vice versa.

In this example, the set of eSIMs and associated identifiers is stored on the memory 28b of the remote server 24b, and the data processing system 10b is configured to perform the eSIM authentication process discussed later with reference to Fig. 4 through a remote connection to the server 24b, via the satellite 14b. Further, in this example, the memory 28b stores a larger set of eSIMs which are authorised for a plurality of aircraft including the aircraft 2b (e.g. for all aircraft operated by the airline). A subset of the eSIMs stored in the memory 28b are specifically authorised for the aircraft 2b, with each eSIM of the subset being associated with a respective passenger seat on the aircraft 2b as described previously with reference to Fig. 1. Such a subset may additionally or alternatively be retrieved by the data processing system 10b and stored locally on the memory 6b located on the aircraft 2b. Alternatively, each of the eSIMs stored in the memory 28b are authorised for the aircraft 2b, and each individual passenger may be provided with the opportunity to install one of these respective eSIMs on their mobile cellular device upon purchasing a ticket for the aircraft 2b.

As will be well understood by those skilled in the art, a number of standard modules such as processors, memories, oscillators, filters, amplifiers, digital to analogue converters (DACs), analogue to digital converters (ADCs), etc. are provided in the base station transceiver 4a, 4b, the data processing system 10a, 10b, the satellite 14a, 14b, and the server 24b, but the description of these is omitted for the sake of brevity. Although the data processing system 10a, 10b and the base station transceiver 4a, 4b are illustrated as distinct blocks in Figs. 1 and 2, this may not be the case in other examples and the functions of the data processing system 10a, 10b may be performed by one or more processors of the transceiver 4a, 4b. The memories 6a, 6b, 28b may be any suitable form of computer-readable memory, e.g. volatile or non-volatile memory.

Fig. 3 is a flowchart 34 illustrating a method of provisioning an eSIM profile to the mobile device 12a, 12b for authorising access to the digital radio communication system 1a, 1b in accordance with an example of the present disclosure. At step 36, the user of the mobile device 12a, 12b purchases a ticket to board the aircraft 2a, 2b. Depending on airline policy, the passenger may select or be allocated a specific seat on the aircraft at this stage, or they may select or be allocated a specific seat at the point of obtaining their boarding pass. Alternatively, the passenger may select a seat of their own choosing upon boarding the aircraft.

At step 38, the passenger is provided with a personalised link via which they may access a secure internet portal through which they may obtain an eSIM profile for installation on their mobile cellular device 12a, 12b. The link may be provided to the passenger in a number of different ways. In some examples, the link is provided to the passenger as a clickable hyperlink either on or provided alongside a digital boarding pass. The hyperlink may additionally or alternatively be provided to the passenger in a different manner, e.g. via an email or text message. In some examples, the link is provided to the passenger using a quick response (QR) code, scannable by a camera of the mobile device 12a, 12b, which directs the mobile device 12a, 12b to the secure internet portal upon scanning thereof. In some examples, the QR code is provided on the passenger's paper boarding pass. The QR code may additionally or alternatively be provided on the back of the aircraft seat which is located in front of, optionally directly in-front of, the seat in which the passenger sits. It will be appreciated that in other examples the link may be provided to the passenger in any appropriate manner.

At step 40, the passenger opens the link, e.g. by clicking on the hyperlink or scanning the QR code. This directs the mobile device 12a, 12b to a secure internet eSIM portal using a suitable network, e.g. a Wi-Fi network to which they are already connected, a cellular connection accessible using a SIM or eSIM already installed on the device (e.g. their home network), etc. While accessing the secure portal, at step 42, the mobile device 12a, 12b transmits a request for an eSIM profile associated with the link over the network. This signal is received by the host of the secure portal, e.g. a server.

At step 44, the portal host determines which of a stored set of eSIMs, stored in a memory accessible thereto, is associated with the link through which the request was received. Each link is associated with a specific eSIM in the stored set of eSIMs. As such, each of the stored eSIMs is effectively associated with a specific boarding pass (e.g. where the link is provided to the passenger using a hyperlink or QR code associated with the boarding pass of the passenger), or with a specific passenger seat on the aircraft 2a, 2b (e.g. where the link is provided to the passenger using a QR code positioned on the back of the seat in front of their seat). At step 46, the portal host transmits the eSIM profile determined at step 44 to the mobile device 12a, 12b, over the network. The mobile device 12a, 12b then installs the received eSIM profile thereon in the normal way. At step 48, the passenger activates the eSIM on the mobile device 12a, 12b, e.g. after boarding the aircraft 2a, 2b, in order to gain access to the radio communication system 1a, 1b whilst aboard the aircraft (subject to authorisation procedures set out below with reference to Fig. 4).

Fig. 4 is a flowchart 50 illustrating a method of authenticating the mobile cellular device 12a, 12b located on the aircraft 2a, 2b, for access to the digital radio communication system 1a, 1b. At step 52, the mobile cellular device 12a, 12b transmits a signal indicative of an identifier with an eSIM installed thereon, e.g. one or more of an International Mobile Subscriber Identity (IMSI), a Subscription Permanent Identifier (SUPI), or an Integrated Circuit Card ID (ICCID), to the base station transceiver 4a, 4b. At step 54, the data processing system 10a, 10b compares the received identifier with a stored set of identifiers stored in the memory 6a or the memory 28b (via a remote connection in the latter case), in order to determine whether there an identifier match exists at step 56. Each stored identifier may be associated with a respective eSIM which is available for distribution via the method outlined above with reference to Fig. 3.

In the event that the received identifier does not match any of the stored identifiers, the method proceeds to step 58, where the base station transceiver 4a, 4b transmits a signal indicative of an unsuccessful eSIM authentication to the mobile cellular device 12a, 12b. Consequently, the base station transceiver 4a, 4b refuses the mobile device 12a, 12b access to the radio communication system 1a, 1b, since it has effectively determined that the eSIM in use by the mobile device 12a, 12b is not authorised for the aircraft 2a, 2b.

In the event that the received identifier does match a stored identifier, the method proceeds to step 60, where the base station transceiver 4a, 4b transmits a signal indicative of a successful eSIM authentication to the mobile cellular device 12a, 12b. In some examples, this is the final step of the method, and the base station transceiver 4a, 4b consequently grants the mobile device 12a, 12b access to the radio communication system 1a, 1b.

Optionally, in some examples, after step 60, the method proceeds to step 70, where the communication system 1a, 1b assigns a quality of service (QoS) profile to the mobile device 12a, 12b. This QoS profile dictates various connection parameters for the mobile device 12a, 12b, e.g. data rate, bandwidth, latency, maximum download limit, maximum upload limit, etc. This QoS profile may be stored in the memory 6a, 6b and/or 28b, and it may be communicated to the mobile device 12a, 12b.

In some examples the QoS profile assigned to the mobile device 12a, 12b is a standard QoS profile used for all passenger mobile devices. In some examples, the QoS profile assigned to the mobile device 12a, 12b is stored in the memory 6a, 28b and associated with the stored identifier which was determined to match the identifier received at step 52. The stored QoS profile may be dependent on the type of aircraft ticket purchased by the passenger - e.g. with a higher QoS being allocated to first class and/or business class passengers and a lower QoS being allocated to economy passengers. The stored QoS profile may be dependent on an optional purchase available to the passenger when they purchase an aircraft ticket and/or on-board the aircraft. The stored QoS profile may be correlated with an airline loyalty scheme in which QoS benefits can be redeemed in accordance with a passenger's balance of loyalty credits.

Optionally, in some examples, after step 60, the method proceeds to step 62, where the base station transceiver 4a, 4b directs the mobile device 12a, 12b to a secure authentication interface (e.g. a captive portal/web page) where the user of the mobile device 12a, 12b may be prompted to input a validation token. In this example, the mobile device 12a, 12b is permitted to access this secure authentication interface via the communication system 1a, 1b, but they are not permitted to access other features e.g. general internet access or calls.

At step 64, the user manually inputs a validation token through the secure authentication interface using an input mechanism of the mobile device 12a, 12b. The validation token in this example comprises textual and/or numeric data. The validation token may be provided to the user in any appropriate manner, e.g. on their physical or digital boarding pass, sent via email, etc. In some examples the validation token is the passenger's ticket number. The validation token input by the passenger is transmitted to the base station transceiver 4a, 4b by the mobile device 12a, 12b.

In this example, each stored eSIM identifier is associated with a set of one or more stored validation tokens which are also stored in the memory 6a, 28b as appropriate, e.g. as part of a database. At step 66, the data processing system 10a, 10b compares the received validation token with the stored set of validation tokens associated with the stored identifier which matched the received identifier at step 56. Alternatively, a set of validation tokens are stored in the memory 6a, 28b and not associated with any particular identifiers, in which case the data processing system 10a, 10b compares the receiver validation token with each of the validation tokens of the stored set.

At step 68, the data processing system 10a, 10b determines whether the received validation token matches one of the validation tokens stored in the set. If a validation token match does not exist, the method proceeds to step 72 where the system 1a, 1b either redirects the mobile device 12a, 12b to the secure authentication interface to allow the user thereof to try again at inputting a validation token, or it assigns a minimum QoS to the mobile device 12a, 12b. Such a minimum QoS may permit the mobile device 12a, 12b to access in-flight entertainment and/or shopping features, but not general internet access. Alternatively, the minimum QoS may permit the mobile device 12a, 12b general internet access but only using spare network resources which are not already being used by other devices aboard the aircraft 2a, 2b.

If a validation token match does exist, the method proceeds to step 70 where the communication system 1a, 1b assigns a QoS profile to the mobile device 12a, 12b. The QoS assigned to the mobile device 12a, 12b is stored in the memory 6a, 28b and associated with the stored identifier which matched the received identifier at step 56, and/or the stored validation token which matched the received validation token at step 68, e.g. in a database. Alternatively, the QoS may be a standard QoS assigned to all mobile devices as described previously.

It will be appreciated by those skilled in the art that the present disclosure has been illustrated by describing one or more specific examples thereof, but is not limited to these aspects; many variations and modifications are possible, within the scope of the accompanying claims.

## Claims

1. A digital radio communication system for an aircraft, comprising:
a cellular base station transceiver; and
a data processing system,
wherein the cellular base station transceiver and the data processing system are configured for location within an aircraft and the cellular base station transceiver is configured for transmitting data to, and receiving data from, mobile cellular devices located within the aircraft;
wherein the cellular base station transceiver is configured to receive, by radio from a mobile cellular device located within the aircraft, an identifier associated with an embedded Subscriber Identity Module (eSIM) installed on the mobile cellular device; and
wherein the digital radio communication system is configured:
to use the data processing system to determine whether the received identifier matches an identifier of a stored set of identifiers authorised for the aircraft, each identifier of the stored set of identifiers being associated with a respective eSIM associated with the aircraft;
when an identifier match exists and optionally one or more further conditions are met, to transmit a radio signal indicative of a successful eSIM authentication to the mobile cellular device; and
when an identifier match does not exist, to transmit a radio signal indicative of an unsuccessful eSIM authentication to the mobile cellular device.

2. The digital radio communication system of claim 1, configured to:
when an identifier match exists, grant the mobile cellular device access to the digital radio communication system; and
when an identifier match does not exist, refuse the mobile cellular device access to the digital radio communication system.

3. The digital radio communication system of any preceding claim, wherein the stored set of identifiers is stored on a local memory of the data processing system.

4. The digital radio communication system of claim 1 or 2, wherein the stored set of identifiers is stored on a server located remotely from the aircraft, as data associated with the aircraft, and wherein the data processing system is configured to access the stored set of identifiers via a remote connection.

5. The digital radio communication system of any preceding claim, wherein each passenger seat of the aircraft is associated with a different respective identifier in the stored set of identifiers.

6. The digital radio communication system of any preceding claim, wherein the identifier comprises any one or more of: an International Mobile Subscriber Identity (IMSI), or a Subscription Permanent Identifier (SUPI), or an Integrated Circuit Card ID (ICCID).

7. The digital radio communication system of any preceding claim configured, when an identifier match exists, to assign a quality of service (QoS) profile to the mobile cellular device, selected from a set of possible QoS profiles at least partly in dependence on the received identifier.

8. The digital radio communication system of any preceding claim configured:
to receive a validation token by radio from the mobile cellular device;
to determine whether the received validation token matches a validation token of a stored set of validation tokens;
when an identifier match exists and a validation token match exists, to permit use of the digital radio communication system by the mobile cellular device; and
when a validation token match does not exist, to refuse or restrict use of the digital radio communication system by the mobile cellular device.

9. The digital radio communication system of claim 8, configured to receive, from the mobile cellular device, a validation token comprising textual and/or numerical data input manually by a user of the mobile cellular device using an input mechanism of the mobile cellular device.

10. The digital radio communication system of claim 8 or 9, configured, when an identifier match exists, to direct the mobile cellular device to display a secure authentication interface through which a user of the mobile cellular device can input the validation token.

11. The digital radio communication system of any of claims 8 to 10, configured to assign a quality of service (QoS) profile to the mobile cellular device, selected from a set of possible QoS profiles at least partly in dependence on the received validation token.

12. A method of provisioning an embedded Subscriber Identity Module (eSIM) profile on a mobile cellular device of an aircraft passenger, for authorising access to a digital radio communication system as claimed in any of claims 1 to 11, the method comprising:
providing the passenger with a link to an eSIM distribution platform, the link being associated with a specific seat on the aircraft and/or a specific boarding pass;
receiving, from the mobile cellular device of the passenger and via the eSIM distribution platform, a request for an eSIM profile;
transmitting, to the mobile cellular device and via the eSIM distribution platform, an eSIM profile associated with the specific seat on the aircraft and/or the specific boarding pass.

13. The method of claim 12, wherein the link is provided to the passenger using a quick-response (QR) code scannable by a camera of the mobile cellular device of the aircraft passenger.

14. The method of claim 12, wherein the link is a hyperlink provided to the passenger with a digital boarding pass.

15. A method of authenticating a mobile cellular device located within an aircraft for access to a digital radio communication system, the digital radio communication system comprising a cellular base station transceiver located on the aircraft and a data processing system located on the aircraft, the method comprising:
receiving, by radio from the mobile cellular device, an identifier associated with embedded Subscribed Identity Module (eSIM) installed on the mobile cellular device;
determining, by the data processing system, whether the received identifier matches an identifier of a stored set of identifiers authorised for the aircraft, each identifier of the stored set of identifiers being associated with a respective eSIM associated with the aircraft;
when an identifier match exists and optionally one or more further conditions are met, transmitting a radio signal indicative of a successful eSIM authentication to the mobile cellular device; and
when an identifier match does not exist, transmitting a radio signal indicative of an unsuccessful eSIM authentication to the mobile cellular device.
